# FASCICULE DE BREVET EUROPEEN

(11) **EP 2 216 220 B1**
(45) Date de publication et mention de la délivrance du brevet: **23.05.2012**
(21) Numéro de dépôt: 10151941.1
(22) Date de dépôt: 28.01.2010
(51) Int. Cl.: B60T 11/18, B60T 11/22, B60T 11/228, B60T 11/26, B60T 11/28, B60T 11/32, B60T 17/06

(54) **Dispositif de protection d'un réservoir de liquide de frein et réservoir équipé de tels dispositifs**
Schutzvorrichtung eines Bremsflüssigkeitsbehälters, und mit solchen Vorrichtungen ausgestatteter Behälter
Protection for a brake fluid reservoir and reservoir provided with said protection

(30) Priorité: 06.02.2009 FR 0900543
(43) Date de publication de la demande: 11.08.2010
(73) Titulaire: Robert Bosch GmbH, 70442 Stuttgart-Feuerbach (DE)
(72) Inventeur: Lenczner, Sylvain, 77450, ESBLY (FR); L'Aot, Jean-Michel, 93240, STAINS (FR); Maury, Vincent, 92600 Asinères sur Seine (FR)
(74) Mandataire: Hurwic, Aleksander Wiktor

(56) Documents cités:
- EP-A- 0 320 177
- EP-A- 0 340 186
- WO-A-03/012331
- FR-A- 2 387 827
- FR-A- 2 645 815
- FR-A- 2 915 945
- GB-A- 2 087 018
- GB-A- 2 114 246

## Description

### Domaine de l'invention

La présente invention se rapporte à un dispositif de protection d'un réservoir de liquide de frein.

L'invention se rapporte également à un réservoir de liquide de frein pour un maitre-cylindre équipé de tels dispositifs et à un tel maitre-cylindre.

### Etat de la technique

On connaît du FR 2 645 815 ou WO 03/012331 des dispositifs du type défini ci-dessus permettant de fermer les sorties du réservoir de liquide de frein au cas où le réservoir se détacherait du maître-cylindre, pour éviter les fuites de liquide et un éventuel incendie.

Actuellement, les deux embouts de sorties (ou pipes de liaison) reliant le fond du réservoir de liquide de frein aux deux entrées du maître-cylindre reçoivent un manchon d'étanchéité coiffant chaque pipe de liaison et un clapet dans cette pipe de liaison. Le clapet et son siège de clapet avec un ressort prenant appui contre une butée du fond du réservoir sont préalablement montés dans la pipe de liaison ; le clapet s'ouvre vers l'intérieur du réservoir et est fermé au repos, c'est-à-dire lorsque le réservoir n'est pas assemblé au maître-cylindre. Le clapet comporte une tige formant le piston et traversant la bague constituant le siège pour venir en saille de la pipe de liaison garnie du manchon formant le joint qui retient ce dispositif.

Lorsque le réservoir est installé sur le maître-cylindre, l'extrémité du piston est repoussée contre l'action du ressort et libère ainsi la communication entre le réservoir et le maître-cylindre pour son alimentation en liquide de frein.

Inversement, lorsque le réservoir n'est pas installé le clapet ou, plus exactement, les deux clapets sont fermés. Il en est de même si le réservoir est détaché du maître-cylindre ou s'en détache accidentellement de sorte que le liquide de frein ne peut fuir du réservoir.

Ce dispositif est composé de trois pièces en plus du joint et tant pour la fabrication que pour le montage, ce dispositif est compliqué et coûteux.

### But de l'invention

La présente invention a pour but de développer un dispositif de protection du réservoir de liquide de frein qui soit simple à réaliser et à mettre en place tout en assurant l'étanchéité du réservoir au cas où il se séparerait du maître-cylindre.

### Exposé et avantages de l'invention

A cet effet, l'invention concerne un dispositif du type défini ci-dessus caractérisé en ce qu'il comprend
- un manchon formant un joint et muni d'un opercule divisé destiné à coiffer un embout de sortie du réservoir de liquide de frein qui se fixe dans un logement du maître-cylindre,
- l'opercule divisé forme un clapet fermé au repos et s'ouvrant vers le réservoir,
- l'opercule comporte un doigt en saillie destiné à prendre appui contre le maître-cylindre pour ouvrir l'opercule par l'assemblage du réservoir au maître-cylindre), l'opercule étant rappelé en position fermée dès que le contact du maître-cylindre et du doigt disparaît.

Ce dispositif de protection est simple à fabriquer par moulage en matière plastique souple, ou en caoutchouc synthétique. Sa mise en place sur les deux embouts du réservoir se fait par simple emmanchement. Dans cette position, lorsque le réservoir n'est pas encore fixé au maître-cylindre, les clapets formés par les opercules sont fermés. La mise en place du réservoir sur le maître-cylindre se fait de façon habituelle par engagement des deux embouts (ou tiges de liaison) dans les logements qui leur sont destinés dans le dessus du maître-cylindre. Puis, l'assemblage est complété et sécurisé par une liaison vissée.

Si, en cas d'accident ou, plus généralement d'une défaillance, le réservoir devait se détacher du maître-cylindre, les clapets formés par les opercules se fermeront automatiquement puisque leur doigt qui, en position installée prend appui contre le fond du logement du maître-cylindre, n'est plus en appui. Le dispositif offre ainsi une parfaite sécurité malgré sa simplicité de fabrication et d'installation. Ce dispositif est en outre particulièrement économique.

Suivant une autre caractéristique, le doigt en saillie est porté par l'opercule et il prend appui contre le logement du maître-cylindre pour ouvrir l'opercule.

Suivant une autre caractéristique, l'opercule est réalisé dans la même matière que le manchon et fait corps avec lui.

Bien qu'il soit possible de réaliser l'opercule en une matière différente de celle du manchon et de fixer l'opercule par surmoulage au moment de la fabrication du manchon, il est particulièrement simple de réaliser le dispositif en une seule pièce par une seule opération de moulage.

Suivant une autre caractéristique avantageuse, l'opercule est fendu suivant une ligne diamétrale formant deux parties d'un disque circulaire se chevauchant sensiblement suivant cette ligne pour permettre leur séparation en direction de l'intérieur du réservoir.

Suivant une autre caractéristique avantageuse, le manchon comporte une nervure intérieure de maintien destinée à s'accrocher sur l'embout du réservoir.

Cette nervure intérieure favorise l'accrochage du dispositif sur un embout de réservoir et évite que celui ne puisse s'en détacher accidentellement au cours des opérations de manutention entre l'assemblage du réservoir et son montage sur le maître-cylindre.

Enfin, l'invention concerne également un réservoir de liquide de frein dont les embouts de sortie sont munis chacun d'un dispositif de protection comme défini ci-dessus.

De manière particulière, chaque embout de sortie du réservoir comporte, près de sa base, une gorge périphérique pour recevoir la nervure de maintien du dispositif comme décrit ci-dessus, ce qui sécurise encore plus l'assemblage.

L'invention a également pour objet un dispositif de protection d'un réservoir de liquide de frein caractérisé en ce que le manchon formant joint, comporte en outre des moyens d'étanchéité entre ledit manchon et le réservoir.

L'invention a également pour objet un réservoir caractérisé en ce qu'il comporte un embout de sortie de forme tubulaire coiffé par le manchon formant joint.

L'invention a également pour objet un maître-cylindre caractérisé en ce qu'il comporte un réservoir monté sur ledit maître-cylindre caractérisé en ce que ledit manchon formant joint est inséré entre le réservoir et un orifice d'alimentation du liquide de frein du maître-cylindre, ledit manchon permettant la réalimentation de l'orifice d'alimentation du maître-cylindre par l'embout de sortie du réservoir et comportant des moyens assurant le confinement hermétique du liquide de frein dans cet ensemble en empêchant l'écoulement du liquide de frein du réservoir en dehors du maître-cylindre.

### Dessins

La présente invention sera décrite ci-après à l'aide d'un mode de réalisation représenté dans les dessins annexés dans lesquels :
- la figure 1 est une vue en coupe d'un dispositif de protection selon l'invention en position de repos,
- la figure 2 montre le dispositif de protection selon l'invention en position ouverte,
- les figures 3A, 3B montrent une vue en coupe partielle du fond d'un réservoir de liquide de frein montrant les deux embouts de sortie ; la figure 3B montrant la partie du réservoir de la figure 3A dont les embouts sont équipés des dispositifs de protection selon l'invention,
- la figure 4 est une vue axométrique d'un fond de réservoir de liquide de frein dont les embouts sont munis chacun d'un dispositif de protection selon l'invention,
- la figure 5 est une vue schématique agrandie de l'installation d'un embout de réservoir, muni de son dispositif de protection selon l'invention dans son logement d'un maître-cylindre de frein.

### Description d'un mode de réalisation de l'invention

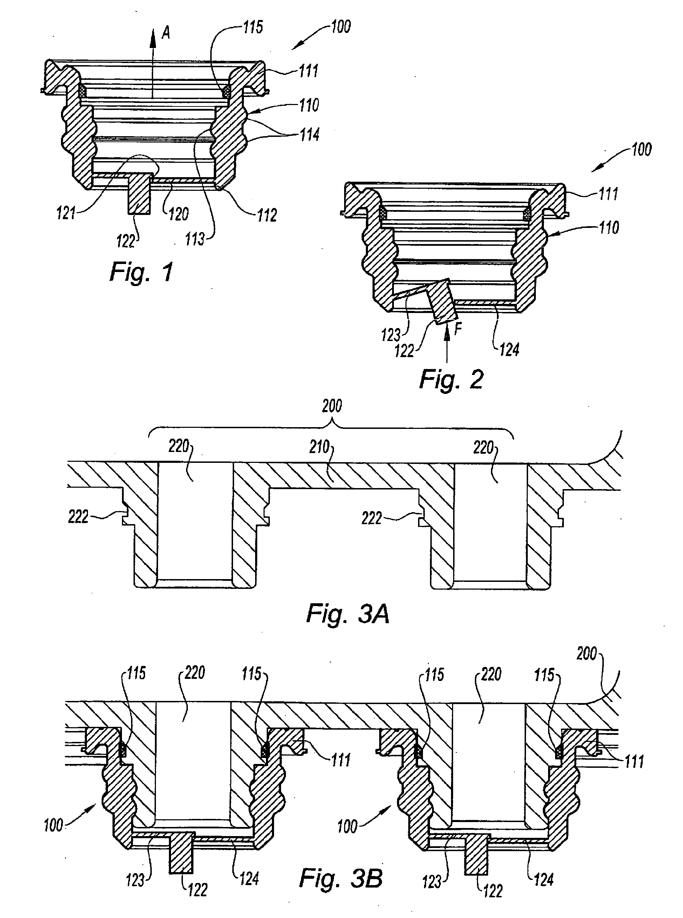

Selon la figure 1, le dispositif de protection selon l'invention 100 forme un joint destiné à coiffer les embouts de sortie encore appelés tiges de liaison d'un réservoir de liquide de frein pour son branchement sur le maître-cylindre commandant les circuits de frein. Le dispositif 100 se compose d'un manchon 110 muni à sa base (partie supérieure selon son orientation de montage) d'une lèvre d'étanchéité périphérique 111 et dont le fond est fermé par un opercule 120. Cet opercule 120 est divisé selon une ligne 121 et forme un clapet s'ouvrant en direction du réservoir (direction A). En position de repos, le clapet est fermé.

L'opercule 120 comporte un doigt 122 venant en saillie par rapport au bord 112 du manchon 110 pour commander l'ouverture du clapet lorsque le dispositif 100 est installé sur le maitre-cylindre comme cela sera vu ultérieurement.

Cette position d'ouverture de l'opercule formant le clapet, vers l'intérieur du manchon, est représentée à la figure 2, le doigt étant poussé par une force représentée par la flèche F. Lorsque cette force disparaît (c'est-à-dire lorsque l'appui disparaît), l'opercule 120 reprend sa position fermée de la figure 1.

Le manchon 110 et son opercule 120 sont réalisés dans la même matière qui est, de préférence, une matière plastique souple ou du caoutchouc par exemple synthétique, résistant à l'attaque de liquide de frein, ils sont moulés en une seule pièce. Dans l'exemple présenté, l'opercule 120 est divisé suivant une ligne 121 sensiblement diamétrale définissant ainsi deux parties 123, 124 en forme de demi-disques circulaires qui se chevauchent au niveau de la ligne de division. Le chevauchement se fait dans le sens rentrant pour la partie 123 de l'opercule munie du doigt 122, en direction de l'intérieur du réservoir. L'opercule est relié sur toute sa périphérie à la surface intérieure du manchon 110 avec lequel il fait corps.

L'élasticité de la matière permet la déformation de la partie 123 de l'opercule munie du doigt 122.

Le manchon 110 présente intérieurement et extérieurement des bourrelets 113, 114 ainsi qu'une nervure intérieure 115 munie d'une arête vive, destinée à favoriser son accrochage à l'embout 220 du réservoir.

La vue en coupe de la figure 3A montre les deux embouts de sortie 220 prévus dans le fond 210 du réservoir 200 non détaillé. Près de leur base, les deux embouts 220 sont munis d'une gorge périphérique 222 recevant la nervure intérieure 115 du manchon 110.

La figure 3B montre l'installation des deux dispositifs de protection 100 sur les embouts de sortie 220 ; cette figure correspond à la position de repos, c'est-à-dire que le réservoir 200 n'est pas installé sur le maître-cylindre.

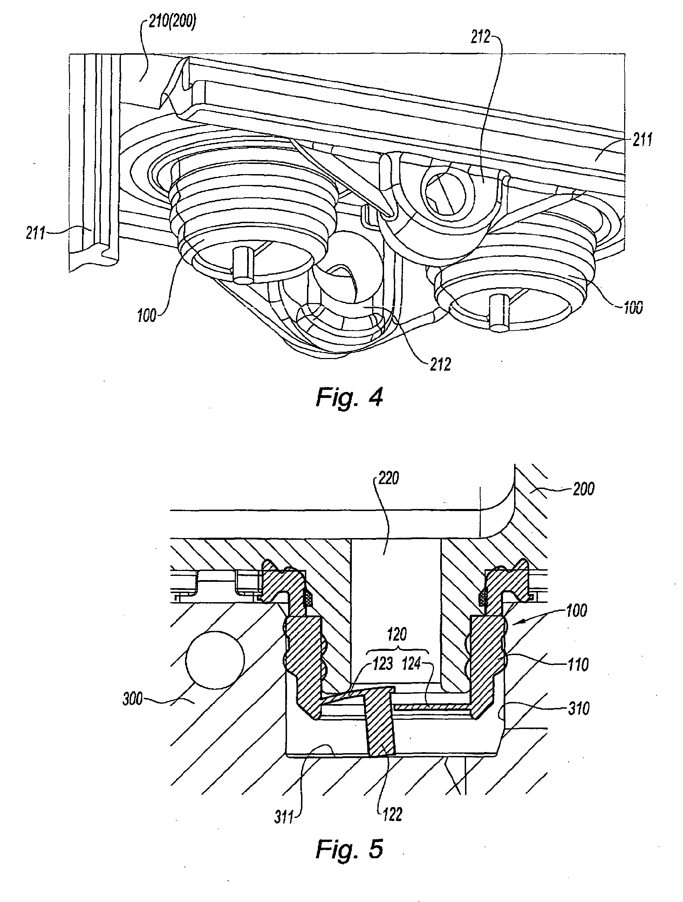

La vue en perspective de la figure 4 montre le fond 210 du réservoir 200 dont les embouts 220 sont équipés chacun d'un dispositif de protection 100.

Cette figure montre également des nervures d'appui 211 ainsi que deux pattes de fixation 212 pour solidariser le réservoir 200 au maître-cylindre par une liaison vissée non détaillée et connue en soi.

La figure 5 est une vue à échelle agrandie d'un embout 220 de réservoir 200 muni de son dispositif de protection 100, lorsque le réservoir 200 est installé sur le maître-cylindre 300. L'embout 220 avec son dispositif de protection 100 est placé dans le logement 310 qui lui est destiné dans le maître-cylindre 300. Dans cette position, le doigt 122 de l'opercule prend appui contre le fond 311 du logement 310 et soulève ainsi élastiquement la partie 123 de l'opercule munie de ce doigt 122. Cette déformation se fait de manière élastique, la partie 123 de l'opercule étant reliée en périphérie au manchon du dispositif.

La présente invention s'applique au domaine automobile pour sécuriser les systèmes de frein en cas d'accident, avec risque de décrochage du réservoir de liquide de frein 200 par rapport au maître-cylindre 300.

### NOMENCLATURE

- 100: dispositif de protection
- 110: manchon
- 111: lèvre d'étanchéité périphérique
- 112: bord du manchon
- 113, 114: bourrelets
- 115: nervure intérieure
- 120: opercule
- 121: ligne divisant l'opercule
- 122: doigt
- 123, 124: parties de l'opercule
- 200: réservoir de liquide de frein
- 210: fond du réservoir
- 211: nervures
- 212: pattes de fixation
- 220: embouts de sortie
- 222: gorge périphérique
- 300: maître-cylindre
- 310: logement
- 311: fond du logement 310

## Revendications

1. Dispositif de protection d'un réservoir de liquide de frein, comportant un moyen d'obturation pour fermer les embouts de sortie du réservoir si celui-ci se détache du maître-cylindre,
**caractérisé en ce qu'**
il comprend
- un manchon (110) formant un joint et muni d'un opercule (120) divisé destiné à coiffer un embout de sortie (220) du réservoir de liquide de frein (200) qui se fixe dans un logement (310) du maître-cylindre (300),
- l'opercule divisé (120) forme un clapet fermé au repos et s'ouvrant vers le réservoir,
- l'opercule (120) comporte un doigt (122) en saillie destiné à prendre appui contre le maître-cylindre (300) pour ouvrir l'opercule par l'assemblage du réservoir (200) au maître-cylindre (300),
l'opercule (120) étant rappelé en position fermée dès que le contact du maître-cylindre (300) et du doigt (122) disparaît.

2. Dispositif selon la revendication 1,
**caractérisé en ce que**
le doigt (122) porté par l'opercule (120) prend appui contre le logement (310) du maître-cylindre (300) recevant l'embout (22) pour ouvrir l'opercule.

3. Dispositif selon les revendications 1 et 2,
**caractérisé en ce que**
l'opercule (120) est réalisé dans la même matière que le manchon (110) et fait corps avec lui.

4. Dispositif selon la revendication 3,
**caractérisé en ce que**
l'opercule (120) est divisé suivant une ligne diamétrale (121) formant deux parties (123, 124) d'un disque circulaire se chevauchant sensiblement suivant cette ligne pour permettre leur séparation en direction de l'intérieur du réservoir (200).

5. Dispositif selon la revendication 1,
**caractérisé en ce qu'**il comporte une nervure intérieure (115) destinée à s'accrocher sur l'embout (220) du réservoir.

6. Dispositif selon l'une quelconque des revendications précédentes **caractérisé en ce que** le manchon (110) formant joint, comporte en outre des moyens d'étanchéité (111) entre ledit manchon et le réservoir.

7. Réservoir de liquide de frein dont les embouts de sortie sont munis de dispositif de protection selon l'une quelconque des revendications 1 à 6.

8. Réservoir selon la revendication 7
**caractérisé en ce que**
l'embout (220) comporte, près de sa base, une gorge périphérique (222) pour recevoir la nervure intérieure (115) du dispositif (100) selon la revendication 5.

9. Réservoir selon les revendications 7 ou 8 **caractérisé en ce qu'**il comporte un embout (220) de sortie de forme tubulaire coiffé par le manchon (110) formant joint.

10. Maître-cylindre **caractérisé en ce qu'**il comporte un réservoir selon la revendication 9 monté sur ledit maître-cylindre **caractérisé en ce que** ledit manchon (110) formant joint est inséré entre le réservoir et un orifice d'alimentation du liquide de frein du maître-cylindre, ledit manchon (110) permettant la réalimentation de l'orifice d'alimentation du maître-cylindre par l'embout de sortie du réservoir et comportant des moyens (114) assurant le confinement hermétique du liquide de frein dans cet ensemble en empêchant l'écoulement du liquide de frein du réservoir en dehors du maître-cylindre.

## Claims

1. Device for protecting a brake fluid reservoir comprising a shut-off means for sealing the outlet spigots of the reservoir if this reservoir becomes detached from the master cylinder,
**characterized in that** it comprises
- a sleeve (110) forming a seal and provided with a split sealing membrane (120) intended to fit over an outlet spigot (220) of the brake fluid reservoir (200) which is fitted into a housing (310) of the master cylinder (300),
- the split sealing membrane (120) forms a valve shutter that is closed at rest and that opens towards the reservoir,
- the sealing membrane (120) comprises a protruding finger (122) intended to press against the master cylinder (300) to open the sealing membrane as a result of the reservoir (200) being assembled with the master cylinder (300),
the sealing membrane (120) being returned to the closed position as soon as contact between the master cylinder (300) and the finger (122) ceases.

2. Device according to Claim 1, **characterized in that** the finger (122) borne by the sealing membrane (120) presses against the master cylinder (300) housing (310) that accommodates the spigot (220) in order to open the sealing membrane.

3. Device according to Claims 1 and 2, **characterized in that**
the sealing membrane (120) is made of the same material as the sleeve (110) and forms an integral part thereof.

4. Device according to Claim 3, **characterized in that** the sealing membrane (120) is split along a diametral line (121) forming two parts (123, 124) of a circular disc which substantially overlap along this line to allow them to part in the direction of the inside of the reservoir (200).

5. Device according to Claim 1, **characterized in that** it comprises an internal rib (115) intended to catch on the reservoir spigot (220).

6. Device according to any one of the preceding claims, **characterized in that** the seal-forming sleeve (110) further comprises means (111) of sealing between the said sleeve and the reservoir.

7. Brake fluid reservoir, the outlet spigots of which are fitted with protection devices according to any one of Claims 1 to 6.

8. Reservoir according to Claim 7, **characterized in that**
the spigot (220) comprises, near its base, a peripheral groove (222) to accept the internal rib (115) of the device (100) according to Claim 5.

9. Reservoir according to Claim 7 or 8, **characterized in that** it comprises an outlet spigot (220) of tubular shape capped by the seal-forming sleeve (110).

10. Master cylinder, **characterized in that** it comprises a reservoir according to Claim 9 mounted on the said master cylinder and **characterized in that** the said seal-forming sleeve (110) is inserted between the reservoir and a master cylinder brake fluid supply orifice, the said sleeve (110) allowing the master cylinder supply orifice to be resupplied via the reservoir outlet spigot and comprising means (114) that hermetically contain brake fluid within this assembly thereby preventing the brake fluid from the reservoir from flowing out of the master cylinder.

## Patentansprüche

1. Vorrichtung zum Schutz eines Bremsflüssigkeitsbehälters, mit einem Verschlussmittel zum Schließen der Ausgangsstutzen des Behälters, wenn sich dieser von dem Hauptzylinder löst,
**dadurch gekennzeichnet, dass** er Folgendes aufweist:
- eine Muffe (110), die eine Dichtung bildet und mit einem geteilten Deckel (120) versehen ist, der dazu vorgesehen ist, einen Ausgangsstutzen (220) des Bremsflüssigkeitsbehälters (200) zu bedecken, der in einer Aufnahme (310) des Hauptzylinders (300) befestigt wird,
- wobei der geteilte Deckel (120) ein Ventilelement bildet, das in der Ruhestellung geschlossen ist und sich zum Behälter hin öffnet,
- wobei der Deckel (120) einen vorstehenden Zapfen (122) aufweist, der dazu vorgesehen ist, sich am Hauptzylinder (300) abzustützen, um den Deckel durch das Anbringen des Behälters (200) am Hauptzylinder (300) zu öffnen, und wobei der Deckel (120) in die geschlossene Stellung zurückgestellt wird, sobald der Kontakt zwischen dem Hauptzylinder (300) und dem Zapfen (122) nicht mehr besteht.

2. Vorrichtung nach Anspruch 1,
**dadurch gekennzeichnet, dass** sich der am Deckel (120) vorgesehene Zapfen (122) an der den Stutzen (220) aufnehmenden Aufnahme (310) des Hauptzylinders (300) abstützt, um den Deckel zu öffnen.

3. Vorrichtung nach den Ansprüchen 1 und 2,
**dadurch gekennzeichnet, dass** der Deckel (120) aus dem gleichen Material besteht wie die Muffe (110) und einstückig mit dieser ausgebildet ist.

4. Vorrichtung nach Anspruch 3,
**dadurch gekennzeichnet, dass** der Deckel (120) entlang einer diametralen Linie (121) geteilt ist und zwei Abschnitte (123, 124) einer Kreisscheibe bildet, die sich im Wesentlichen entlang dieser Linie überlappen, um ihre Trennung zum Inneren des Behälters (200) hin zu ermöglichen.

5. Vorrichtung nach Anspruch 1,
**dadurch gekennzeichnet, dass** sie eine Innenrippe (115) aufweist, die dazu vorgesehen ist, sich am Stutzen (220) des Behälters festzuhaken.

6. Vorrichtung nach einem der vorhergehenden Ansprüche,
**dadurch gekennzeichnet, dass** die Muffe (110), die eine Dichtung bildet, ferner Abdichtungsmittel (111) zwischen der Muffe und dem Behälter aufweist.

7. Bremsflüssigkeitsbehälter, dessen Ausgangsstutzen mit einer Schutzvorrichtung nach einem der Ansprüche 1 bis 6 versehen sind.

8. Behälter nach Anspruch 7,
**dadurch gekennzeichnet, dass** der Stutzen (220) nahe seiner Basis eine Umfangsnut (222) zur Aufnahme der Innenrippe (115) der Vorrichtung (100) nach Anspruch 5 aufweist.

9. Behälter nach den Ansprüchen 7 oder 8,
**dadurch gekennzeichnet, dass** er einen rohrförmigen Ausgangsstutzen (220) trägt, der von der Muffe (110), die eine Dichtung bildet, bedeckt ist.

10. Hauptzylinder,
**dadurch gekennzeichnet, dass** er einen Behälter nach Anspruch 9 aufweist, der am Hauptzylinder angebracht ist, und **dadurch gekennzeichnet, dass** die Muffe (110), die eine Dichtung bildet, zwischen dem Behälter und einer Öffnung des Hauptzylinders zum Speisen von Bremsflüssigkeit eingefügt ist, wobei die Muffe (110) die Nachspeisung der Speiseöffnung des Hauptzylinders über den Ausgangsstutzen des Behälters ermöglicht und Mittel (114) aufweist, die die hermetische Umschließung der Bremsflüssigkeit in dieser Baugruppe gewährleisten, indem sie das Strömen der Bremsflüssigkeit aus dem Behälter außerhalb des Hauptzylinders verhindern.
